# EUROPEAN PATENT SPECIFICATION

(11) **EP 4 242 789 B1**
(45) Date of publication and mention of the grant of the patent: **01.04.2026**
(21) Application number: 23155087.2
(22) Date of filing: 06.02.2023
(51) Int. Cl.: G06F 1/16, G06F 1/18, G06F 1/20

(54) **DISPLAY DEVICE**
ANZEIGEVORRICHTUNG
DISPOSITIF D'AFFICHAGE

(30) Priority: 03.03.2022 JP 2022032712
(43) Date of publication of application: 13.09.2023
(73) Proprietor: Ricoh Company, Ltd., Tokyo 143-8555 (JP)
(72) Inventor: IIJIMA, Hideaki, Tokyo, 143-8555 (JP)
(74) Representative: SSM Sandmair

(56) References cited:
- WO-A1-2021/165366
- US-A1- 2001 048 586
- US-A1- 2007 297 124

## Description

### BACKGROUND

### Technical Field

Embodiments of the present disclosure relate to a display device.

### Related Art

A technique is known in which a heat transfer unit transfers heat generated from a heat generating component inside a housing of an electronic device to a display panel and the heat is radiated from the display panel for the purpose of efficiently releasing heat of a high-heat generating component (for example, Japanese Unexamined Patent Application Publication No. 2006-032615 (Japanese Patent No. 4421963)).

However, in such a technique, there is a concern that a user may hold a high-temperature portion of the electronic device.

US 2001/048586 A1 provides an information processing equipment which is excellent in the shock resistance, and has a strap and pen storing portion, and has a drip-proof ability.

US 2007/297124 A1 relates to an information processing device having a pair of grip sections protruding towards predetermined directions on both sides of a display in the main body of the device.

WO 2021/165366 A1 discloses a video processing apparatus suitable for use with a variety of videoscopes and videoscope technologies in a variety of settings.

### SUMMARY

To solve the above-described problem, an object of the present disclosure is to provide a display device that can prevent a user from holding a high-temperature portion of the display device.

The invention is set out by the appended set of claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is an external perspective view illustrating a front side of a display device according to an embodiment of the present disclosure;
FIG. 2 is an external perspective view illustrating a rear side of the display device according to an embodiment of the present disclosure;
FIG. 3A is a side view of the display device according to an embodiment of the present disclosure;
FIG. 3B is a rear view of the display device according to an embodiment of the present disclosure;
FIG. 4 is a rear view illustrating an internal configuration of the display device according to an embodiment of the present disclosure;
FIG. 5 is a rear view illustrating a first modification of the internal configuration of the display device according to the embodiment of the present disclosure;
FIG. 6 is a cross-sectional view illustrating the first modification of the internal configuration of the display device according to an embodiment of the present disclosure;
FIG. 7 is a rear view illustrating a second modification of an internal configuration of the display device according to an embodiment of the present disclosure;
FIG. 8 is a rear view illustrating a third modification of an internal configuration of the display device according to an embodiment of the present disclosure;
FIG. 9 is a cross-sectional view illustrating the third modification of the internal configuration of the display device according to an embodiment of the present disclosure;
FIG. 10 is a rear view illustrating a fourth modification of an internal configuration of the display device according to an embodiment of the present disclosure;
FIG. 11 is a cross-sectional view illustrating the fourth modification of the internal configuration of the display device according to an embodiment of the present disclosure; and
FIG. 12 is a cross-sectional view illustrating a fifth modification of an internal configuration of the display device according to an embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Descriptions are given of an example applicable to embodiments of the present disclosure.

### Configuration of Display Device 100

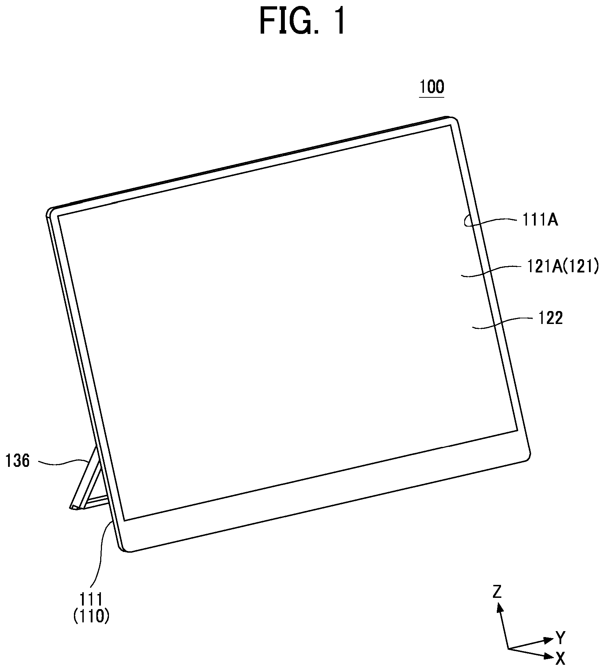

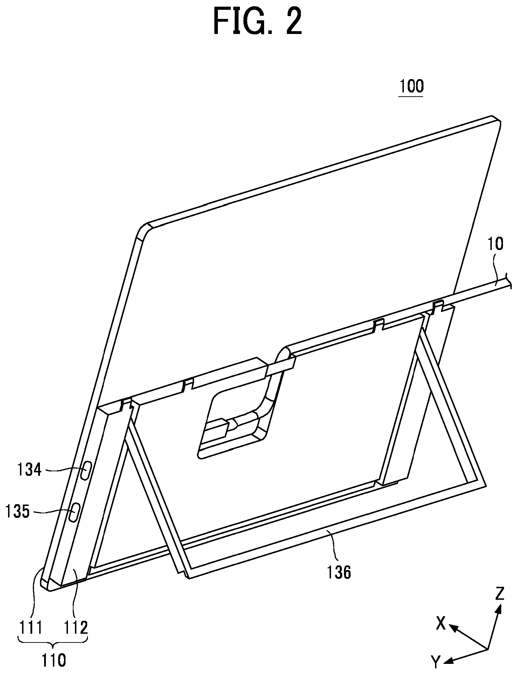

FIG. 1 is an external perspective view illustrating a front side of a display device 100 according to an embodiment of the present disclosure. FIG. 2 is an external perspective view illustrating a rear side of the display device 100 according to an embodiment of the present disclosure.

In the following description, a direction corresponding to the vertical direction of a display 121 is referred to as an up-down direction (Z-axis direction). In addition, a direction corresponding to the horizontal direction of the display 121 is referred to as a width direction or a left-right direction (Y-axis direction). Further, a direction corresponding to the depth direction of the display 121 is referred to as a back-and-forth direction (X-axis direction).

Note that a direction (Y-axis positive direction) on the left side when viewed from the rear side (X-axis negative side) of the display is referred to as a left direction, and a direction (Y-axis negative direction) on the right side when viewed from the rear side (X-axis negative side) of the display is referred to as a right direction.

The display device 100 illustrated in FIGS. 1 and 2 includes a screen 121A of the display 121 on the front face (face on the positive side of the X-axis). The display device 100 is connected to an external device (for example, a laptop computer or a smartphone) via a cable 10 and can display various images (moving images or still images) transmitted from the external device via the cable 10 on the screen 121A of the display 121. In other words, the display device 100 is a relatively thin display device having a built-in battery and portability. The display device 100 can be carried together with the external device and connected to the external device at the time of use. In other words, the display device 100 can be used as an extended display device of an external device.

As illustrated in FIGS. 1 and 2, the display device 100 includes a housing 110 that forms the outer shape of the display device 100. The housing 110 is made of resin and has a hollow structure. The housing 110 includes a thin portion 111 and a thick portion 112.

The thin portion 111 is a plate-shaped portion constituting the front side (Z-axis positive side) of the housing 110. The thin portion 111 has a horizontally long rectangular shape in a plan view from the front side (X-axis positive direction) or the rear side (X-axis negative direction). The thin portion 111 is a portion having a relatively thin thickness in the depth direction (X-axis direction). The thin portion 111 includes the display 121. A rectangular opening 111A is formed in a front face (face on the positive side of the X-axis) of the thin portion 111, and a screen 121A of the display 121 exposes from the opening 111A. The display 121 is, for example, an organic electro-luminescence (EL) display or a liquid crystal display.

In the thin portion 111, a touch sensor 122 is overlaid on the screen 121A of the display 121. The touch sensor 122 receives various input operations, for example, a selection operation and a handwriting input operation. As the touch sensor 122, for example, a capacitive touch panel can be used.

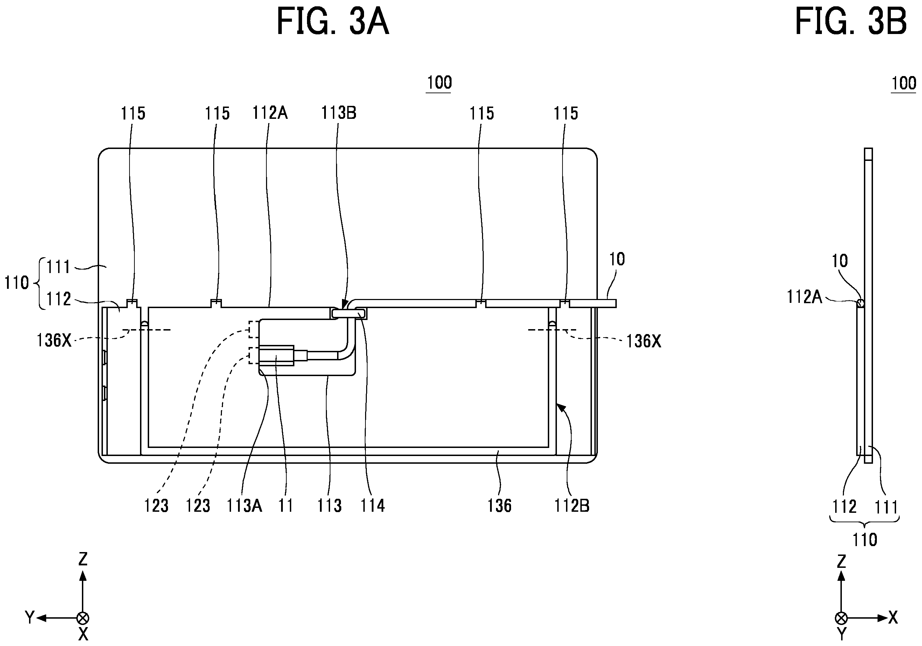

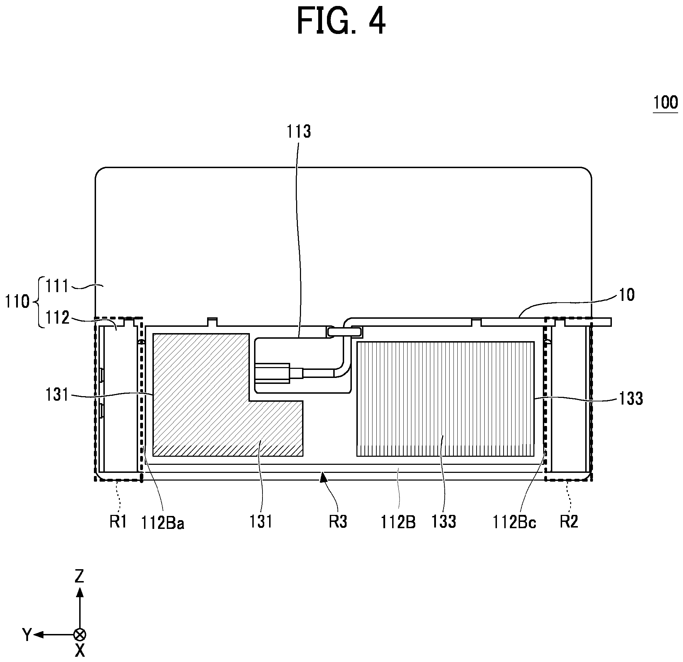

The thick portion 112 is a plate-shaped portion constituting the rear side (X-axis negative side) of the housing 110 and is provided such that the thick portion 112 protrudes backward from a lower portion of the rear face of thin portion 111. The thick portion 112 is a portion having a relatively large thickness in the depth direction (X-axis direction). The thick portion 112 has a horizontally long rectangular shape in a plan view from the rear side (X-axis negative direction). The thick portion 112 has a vertical width and a horizontal width such that the thick portion 112 does not protrude from the thin portion 111 in a plan view from the rear side (X-axis negative direction). As illustrated in FIG. 4, the thick portion 112 includes a control board 131 and a battery 133. As illustrated in FIG. 3, an interface portion 123 to which a connector 11 of the cable 10 is connected is provided on the rear face of the thick portion 112. The interface portion 123 is, i.e., a "terminal" to which the connector 11 of the cable 10 is connected.

A switch 134 and a switch 135 are provided on the left side (Y-axis positive side) of the thick portion 112. The switch 134 and the switch 135 are, for example, a power button, a selection button, a confirmation button, and a return button.

### Configuration of Rear Face of Display Device 100

FIGS. 3A and 3B are a rear view and a side view, respectively, of the display device 100 according to an embodiment of the present disclosure.

As illustrated in FIG. 3A, a recess 113 is formed on the rear face of the thick portion 112 of the housing 110. The recess 113 is a portion recessed forward (X-axis positive direction) having a certain depth. In the example illustrated in FIG. 3A, the recess 113 has a rectangular shape in a plan view from the rear side, but the shape of the recess 113 is not limited to a rectangular shape.

As illustrated in FIG. 3A, the interface portions 123 expose in the recess 113 of the thick portion 112. In the example illustrated in FIG. 3A, the interface portions 123 are disposed in the recess 113 to expose from an inner face 113A on the left side (Y-axis positive side) of the recess 113 of the thick portion 112.

Accordingly, in the display device 100 according to the present embodiment as illustrated in FIG. 3A, the connector 11 provided at one end of the cable 10 can be connected to the interface portion 123 in a state of being disposed in the recess 113.

In other words, in the display device 100 according to the present embodiment, the connector 11 of the cable 10 can be connected to the interface portion 123 without protruding from the side of the housing 110.

As a result, according to the display device 100 of the present embodiment, the display device 100 and the external device can be arranged directly next to each other.

Further, since the display device 100 of the present embodiment can prevent a sudden load from being applied to the connector 11 of the cable 10, the risk of damaging the interface portion 123 can be reduced.

The cable 10 may be, for example, a universal serial bus (USB) cable and a high-definition multimedia interface^{®} (HDMI) cable. The interface portion 123 has a shape fitting into the connector 11 of the cable 10.

The depth of the recess 113 (depth in the X-axis direction) is larger than any of the thickness of the connector 11 and the outer diameter of the cable 10. Accordingly, in the display device 100 according to the present embodiment as illustrated in FIG. 3B, the cable 10 (including the connector 11) in the recess 113 can be connected to the interface portion 123 without protruding to the outer side (X-axis negative side) from the rear face of the thick portion 112.

As a result, the display device 100 according to the present embodiment can prevent a sudden load from being applied to the connector 11 of the cable 10 from the rear side of the thick portion 112.

As illustrated in FIG. 3A, the thick portion 112 includes an outlet 113B through which the cable 10 can be drawn out from the recess 113 to the upper side of the thick portion 112. To be specific, the outlet 113B has a groove shape extending upward (in the Z-axis positive direction) from a corner on the upper right side (Z-axis positive side and Y-axis negative side) of the recess 113 and connecting to a space above the thick portion 112. The depth of the outlet 113B (in the X-axis direction) is the same as the depth of the recess 113 (in the X-axis direction).

As a result, in the display device 100 according to the present embodiment, the cable 10 can be drawn out from the recess 113 to the upper side of the thick portion 112 without protruding from the rear face of the thick portion 112 to the outside (X-axis negative side).

Further, as illustrated in FIG. 3A, the thick portion 112 includes a fastener 114 to fasten the cable 10 to the outlet 113B. To be specific, both end portions of the fastener 114 in the left-right direction (Y-axis direction) can be fixed to the thick portion 112 by fitting in a state of straddling the outlet 113B in the left-right direction (Y-axis direction).

As a result, according to the display device 100 of the present embodiment, the cable 10 can be fastened to the outlet 113B by the fastener 114 so that the cable 10 does not fall off from the outlet 113B. In addition, according to the display device 100 of the present embodiment, even in a case where a load such as being pulled by the cable 10 occurs, the load can be received by the fastener 114. As a result, a risk of damaging the interface portion 123 can be reduced.

As illustrated in FIGS. 3A and 3B, the thick portion 112 has an upper face 112A and can guide an arrangement path of the cable 10 drawn out from the outlet 113B along an upper face 112A of the thick portion 112.

As a result, in the display device 100 according to the present embodiment, the cable 10 drawn out from the outlet 113B can be easily arranged on a predetermined arrangement path.

As illustrated in FIGS. 3A and 3B, the thick portion 112 has clamps 115 to hold the cable 10 whose arrangement path is guided by the upper face 112A of the thick portion 112.

As a result, the display device 100 according to the present embodiment can hold the cable 10 pulled out from the outlet 113B on the predetermined arrangement path.

In the example illustrated in FIG. 3A, the thick portion 112 includes two clamps 115 in each of the arrangement path of the cable 10 on the right side (Y-axis negative side) of the outlet 113B and the arrangement path of the cable 10 on the left side (Y-axis positive side) of the outlet 113B.

As a result, in the display device 100 according to the present embodiment, the cable 10 can be held on the arrangement path by the two clamps 115 in any of the case where the draw-out direction of the cable 10 is left (Y-axis positive direction) and the case where the draw-out direction of the cable 10 is right (Y-axis negative direction).

In the example illustrated in FIG. 3A, on the rear face of the thick portion 112, the interface portion 123 is disposed on the left side (Y-axis positive side) of the central portion in the left-right direction (Y-axis direction), while the outlet 113B is disposed in the central portion in the left-right direction (Y-axis direction).

Accordingly, in the display device 100 according to the present embodiment, the cable 10 connected to the interface portion 123 can be easily bent and drawn out from the outlet 113B (i.e., the center portion in the left-right direction (Y-axis direction)) to the upper side of the thick portion 112.

In addition, in the display device 100 according to the present embodiment, the draw-out direction of the cable 10 from the outlet 113B can be set to either the left direction (Y-axis positive direction) or the right direction (Y-axis negative direction).

As described above, in the display device 100 according to the present embodiment, the outlet 113B is disposed in the central portion in the right-left direction (Y-axis direction). As a result, the length of a portion of the cable 10 guided along the upper face of the thick portion 112 can be equal between the case where the draw-out direction of the cable 10 from the outlet 113B is left (Y-axis positive direction) and the case where the draw-out direction is right (Y-axis negative direction). In other words, the length of the portion of the cable 10 drawn out from the housing 110 to the outside can be equal. As a result, in the display device 100 according to the present embodiment, the required length of the cable 10 can be set to a constant length regardless of whether an external device to be connected to the display device 100 is arranged on the left side or the right side of the display device 100.

In the example illustrated in FIG. 3A, two interface portions 123 are disposed side by side in the up-down direction (Z-axis direction) on the Y-axis positive side of the inner face 113A of the recess 113 of the thick portion 112. Accordingly, in the display device 100 according to the present embodiment, two cables 10 can be connected in the recess 113. As a result, two external devices can be connected to the display device 100 via the two cables 10. In the example illustrated in FIG. 3A, the outlet 113B has a horizontal width (in the right-left direction) larger than twice the outside diameter of the cable 10 such that the two cables 10 can be drawn out side by side.

As illustrated in FIG. 3A, the display device 100 according to the present embodiment includes a stand 136 in the thick portion 112. The stand 136 can be stored in the thick portion 112. As illustrated in FIG. 3A, the stand 136 includes rotation shafts 136X at an upper end portion of the stand 136, and the stand 136 is provided to be rotatable about the rotation shafts 136X.

The stand 136 has a rectangular frame shape. On the other hand, a storage groove 112B having the same shape as the stand 136 is formed in the thick portion 112. As a result, the display device 100 according to the present embodiment can store the stand 136 in the storage groove 112B in a manner such that the stand 136 does not protrude from the rear face of the thick portion 112.

As illustrated in FIGS. 1 and 2, in the display device 100 according to the embodiment, the stand 136 is rotated from the stored state to the opened state, thus allowing the housing 110 to stand on an installation surface. The display device 100 according to the present embodiment can adjust the opening angle of the stand 136 to adjust the inclination of the housing 110 with respect to the installation surface.

The rotation shafts 136X of the stand 136 are disposed below the upper face 112A of the thick portion 112. Accordingly, in the display device 100 according to the present embodiment, the opening and closing operation of the stand 136 does not interfere with the cable 10 arranged along the upper face 112A of the thick portion 112.

As illustrated in FIG. 3A, in a case where the direction in which the cable 10 is drawn out from the outlet 113B is the right direction (Y-axis negative direction), the two clamps 115 provided on the right side (Y-axis negative side) of the outlet 113B hold the cable 10. However, the two clamps 115 provided on the left side (Y-axis positive side) of the outlet 113B are in a free state.

Then, in the display device 100 according to the present embodiment, the cable 10 is folded back in the vicinity of the end portion on the right side (Y-axis negative side) of the housing 110. Thus, the other end portion side of the cable 10 can be held by the clamps 115 provided on the left side (Y-axis positive side) of the outlet 113B.

As a result, when the display device 100 according to the present embodiment is not used (e.g., during transportation or storage), the display device 100 can hold the cable 10 and bring the cable 10 into the stored state without protruding the cable 10 from the housing 110.

In the display device 100 according to the present embodiment, the connector 11 at the one end of the cable 10 is connected to the interface portion 123 without protruding rearward (X-axis negative direction) from the recess 113 of the thick portion 112. Accordingly, a load is less likely to be applied to the connector 11 at the one end even when the display device 100 is not in use (during transportation or storage). As a result, the display device 100 according to the present embodiment can bring the cable 10 into the stored state with the connector 11 at the one end being connected to the interface portion 123.

In the display device 100 according to the present embodiment, the difference between the thickness of the thick portion 112 and the thickness of the thin portion 111 is larger than the outer diameter of the cable 10. As a result, in the display device 100 according to the present embodiment, the portion of the cable 10 drawn out from the outlet 113B can be arranged on the rear face of the thin portion 111 on the upper side of the thick portion 112 such that the cable 10 does not protrude to the outer side (X-axis negative side) from the rear face of the thick portion 112.

### Internal Configuration of Display Device 100

FIG. 4 is a rear view illustrating an internal configuration of the display device 100 according to an embodiment of the present embodiment.

As illustrated in FIG. 4, the thick portion 112 of the housing 110 is divided by the storage groove 112B into a left grip portion R1, an intermediate portion R3, and a right grip portion R2.

To be specific, the storage groove 112B includes a first storage portion 112Ba and a second storage portion 112Bc. The first storage portion 112Ba is elongated in the vertical direction (Z-axis direction) and stores the left frame portion of the stand 136. The second storage portion 112Bc is elongated in the vertical direction (Z-axis direction) and stores the right frame portion of the stand 136.

The left grip portion R1 of the thick portion 112 is a portion of the storage groove 112B on the left side (Y-axis positive side) of the first storage portion 112Ba. The left grip portion R1 has a certain width from the left side face of the housing 110. The left grip portion R1 is a portion gripped by the right hand of a user when the user grips the housing 110 with both hands from the front face side (X-axis positive side) of the housing 110. The left grip portion R1 has a hollow structure. The inner space of the left grip portion R1 is not connected to the inner space of the intermediate portion R3.

The right grip portion R2 of the thick portion 112 is a portion of the storage groove 112B on the right side (Y-axis negative side) of the second storage portion 112Bc. The right grip portion R2 has a certain width from the right side face of the housing 110. The right grip portion R2 is a portion gripped by the left hand of the user when the user grips the housing 110 with both hands from the front face side (X-axis positive side) of the housing 110. The right grip portion R2 has a hollow structure. The inner space of the right grip portion R2 is not connected to the inner space of the intermediate portion R3.

The intermediate portion R3 of the thick portion 112 is a portion between the first storage portion 112Ba and the second storage portion 112Bc of the storage groove 112B. The intermediate portion R3 has a hollow structure.

As illustrated in FIG. 4, the control board 131 and the battery 133 are disposed inside the thick portion 112.

The control board 131 is connected to the interface portion 123, and various electronic components are mounted on the control board 131 to construct a control circuit that controls the operation of the display device 100. In other words, the control board 131 is configured to control the display device 100.

The battery 133 supplies electric power to drive the display device 100. Various rechargeable secondary batteries (for example, a lithium-ion battery and a lithium polymer battery) are used as the battery 133. The display device 100 can be supplied with power from an external device via the cable 10 and the interface portion 123 to charge the battery 133.

As illustrated in FIG. 4, the control board 131 and the battery 133, which are high-temperature components, are disposed inside the intermediate portion R3. In other words, in a first example illustrated in FIG. 4, the control board 131 and the battery 133, which are high-temperature components, are disposed neither inside the left grip portion R1 nor inside the right grip portion R2. In the first example illustrated in FIG. 4, no other high-temperature components are disposed inside the left grip portion R1 and the right grip portion R2.

As a result, the display device 100 according to the present embodiment can prevent the left grip portion R1 and the right grip portion R2, which are touched with a user's hands, from reaching high temperature when the user grips the housing 110 with both hands from the front face side (X-axis positive side) of the housing 110.

In addition, since the display device 100 according to the present embodiment does not actively release the heat generated from the control board 131 and the battery 133 to the display 121, the display device 100 can prevent the display 121 from being high in temperature.

In particular, the display device 100 according to the present embodiment includes the stand 136 that has a frame shape, is rotatable, and can be stored in the storage groove 112B formed on the rear face of the thick portion 112 of the housing 110. The thick portion 112 of the housing 110 is divided by the storage groove 112B into the left grip portion R1, the right grip portion R2, and the intermediate portion R1 provided between the left grip portion R2 and the right grip portion R3.

In other words, in the display device 100 according to the present embodiment, the stand 136 is disposed to surround the interface portion 123, and the left grip portion R1 and the right grip portion R2 are disposed on the outer side of the display device 100 than the stand 136.

Accordingly, in the display device 100 according to the present embodiment, the left grip portion R1 and the right grip portion R1 can be spatially separated from the intermediate portion R3 by the storage groove 112B. Such a configuration can reduce the transmission of heat generated from the high-temperature components in the intermediate portion R3 to the left grip portion R1 and the right grip portion R2.

The display device 100 according to the present embodiment can also prevent the stand 136 from interfering with the user's hands gripping the left grip portion R1 and the right grip portion R2.

It is preferable that each of the left grip portion R1 and the right grip portion R2 has a width equal to or larger than a range in which the user's hand touches. For example, in the present embodiment, each of the left grip portion R1 and the right grip portion R2 has a width equal to or greater than a length from the finger tip to the second joint of the user in view of the situation that a portion from the finger tip to the second joint of the user contacts the left grip portion R1 or the right grip portion R2 when the user grips the housing 110 with both hands from the front face side (X-axis positive side) of the housing 110.

### First Modification

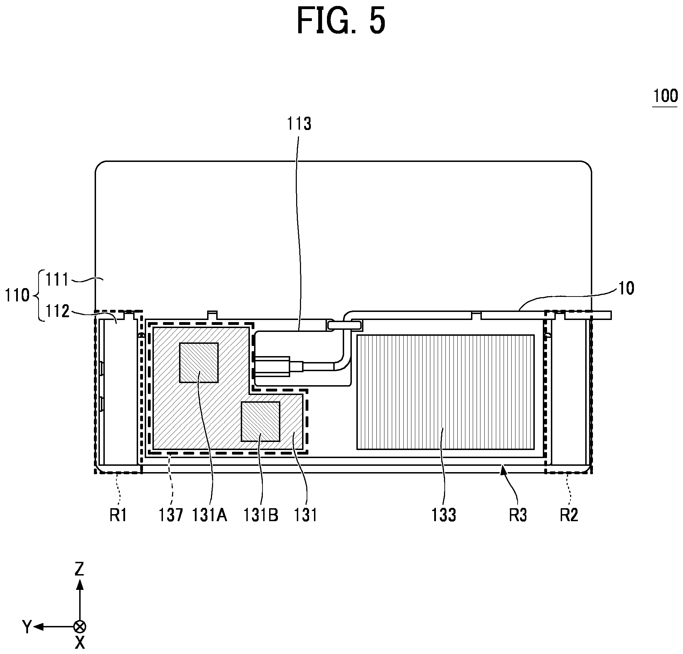

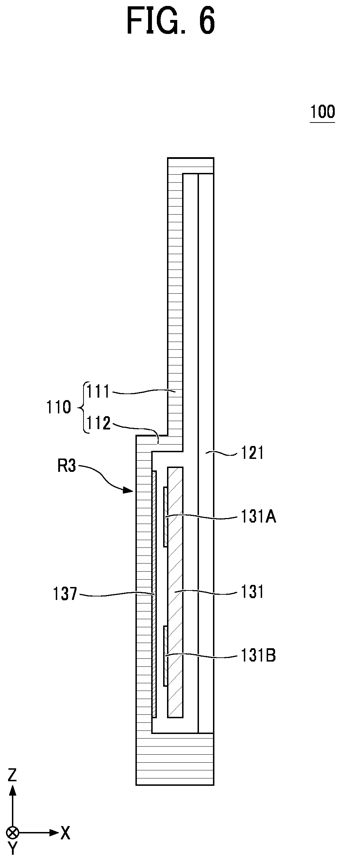

FIG. 5 is a rear view illustrating a first modification of an internal configuration of the display device 100 according to an embodiment of the present disclosure. FIG. 6 is a cross-sectional view illustrating the first modification of the internal configuration of the display device 100 according to an embodiment of the present disclosure.

In the example illustrated in FIGS. 5 and 6, electronic components 131A and 131B which are sources of high temperature are mounted on the control board 131 (high-temperature component).

In the example illustrated in FIGS. 5 and 6, the display device 100 according to the present embodiment includes a thermal conductive sheet 137 attached to the inner face of the thick portion 112 of the housing 110 at a position facing the control board 131 (high-temperature component). As the thermal conductive sheet 137, a sheet member made of a material having high thermal conductivity (for example, aluminum foil) is used.

Accordingly, in the display device 100 according to the present embodiment, heat generated from the electronic components 131A and 131B of the control board 131 is transmitted to the overall thermal conductive sheet 137. As a result, the display device 100 can prevent the temperature of the intermediate portion R3 of the thick portion 112 of the housing 110 from being locally increased. Since the user's hand may touch even the intermediate portion R3, the configuration described above is useful.

### Second Modification

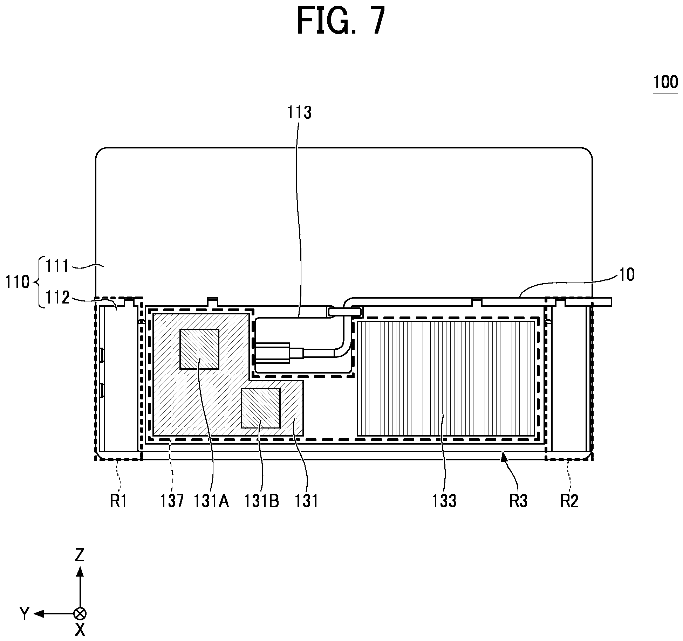

FIG. 7 is a rear view illustrating a second modification of an internal configuration of the display device 100 according to an embodiment of the present disclosure.

In the example illustrated in FIG. 7, the thermal conductive sheet 137 is attached to a wide region including an area facing the control board 131 (high-temperature component) and an area facing the battery 133 (high-temperature component) on the inner face of the thick portion 112 of the housing 110.

Accordingly, in the display device 100 according to the present embodiment, heat generated from the control board 131 and heat generated from the battery 133 are transmitted to the overall thermal conductive sheet 137 in a wider range than in the first modification. Thus, the display device 100 can prevent the temperature of the intermediate portion R3 of the thick portion 112 of the housing 110 from being locally increased.

### Third Modification

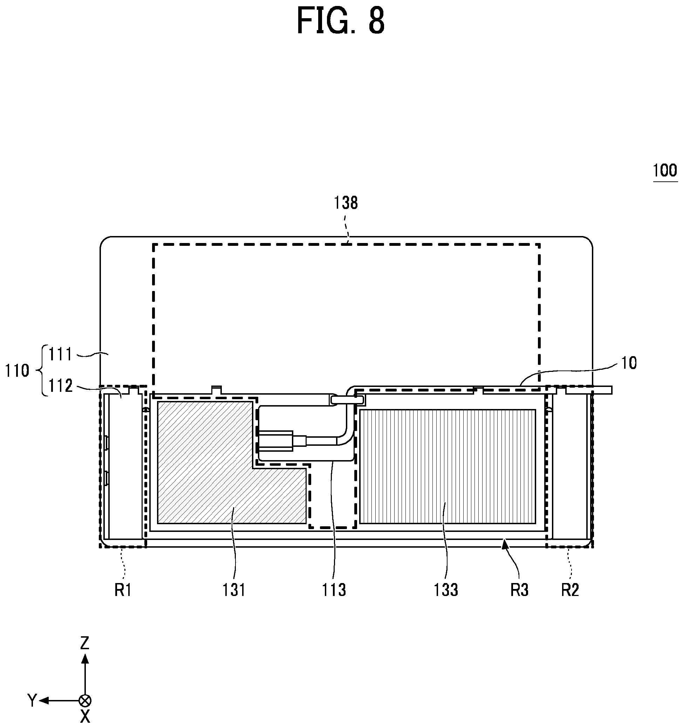

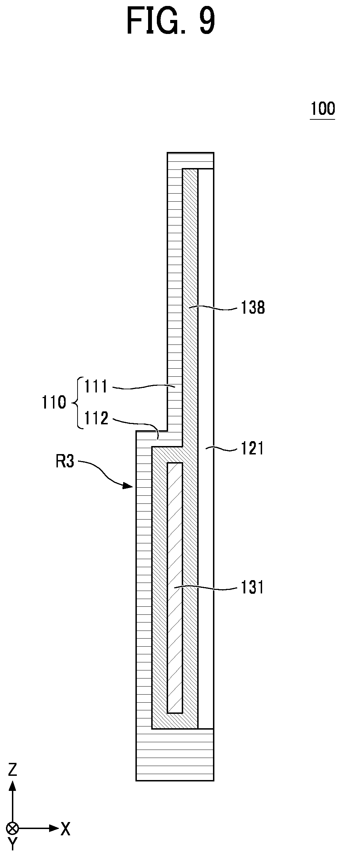

FIG. 8 is a rear view illustrating a third modification of an internal configuration of the display device 100 according to an embodiment of the present disclosure. FIG. 9 is a cross-sectional view illustrating the third modification of the internal configuration of the display device 100 according to an embodiment of the present disclosure.

In the example illustrated in FIGS. 8 and 9, the display device 100 according to the present embodiment includes a heat transfer member 138 disposed between the rear face of the display 121 and the rear face of the housing 110 (excluding the left grip portion R1 and the right grip portion R2) facing each other. As the heat transfer member 138, a sheet member made of a material having high thermal conductivity (for example, aluminum foil or heat transfer rubber) is used.

Accordingly, in the display device 100 according to the present embodiment, heat generated from the display 121 is released to the rear face of the housing 110 (except for the left grip portion R1 and the right grip portion R2) through the heat transfer member 138. As a result, the display device 100 can prevent the display 121 from reaching high temperature. Since the display 121 may be touched by the user's hand for touch operation, the configuration described above is useful.

### Fourth Modification

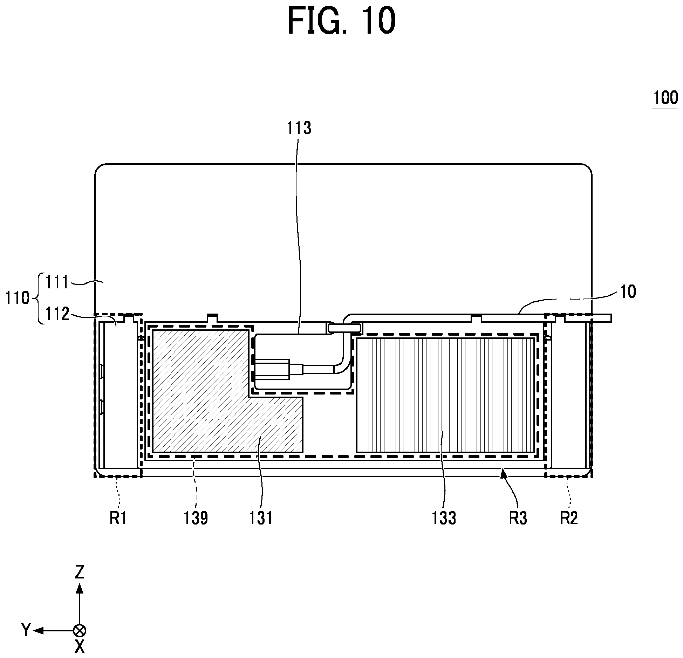

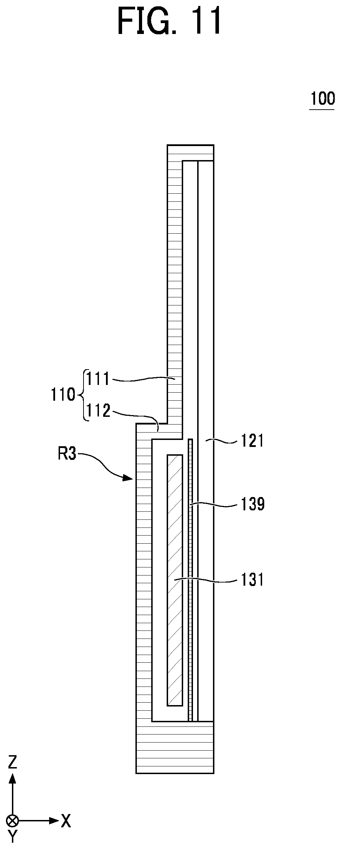

FIG. 10 is a rear view illustrating a fourth modification of an internal configuration of the display device 100 according to an embodiment of the present disclosure. FIG. 11 is a cross-sectional view illustrating the fourth modification of the internal configuration of the display device 100 according to an embodiment of the present disclosure.

In the example illustrated in FIGS. 10 and 11, the rear face of the display 121 and each of the control board 131 (high-temperature component) and the battery 133 (high-temperature component) are opposed to each other. The display device 100 according to the present embodiment includes a sheet-shaped heat insulator 139 disposed between the rear face of the display 121 and each of the control board 131 and the battery 133.

Accordingly, the display device 100 according to the present embodiment can reduce the transmission of heat generated from the control board 131 and the heat generated from the battery 133 to the display 121. As a result, the display device 100 can prevent the display 121 from reaching high temperature.

### Fifth Modification

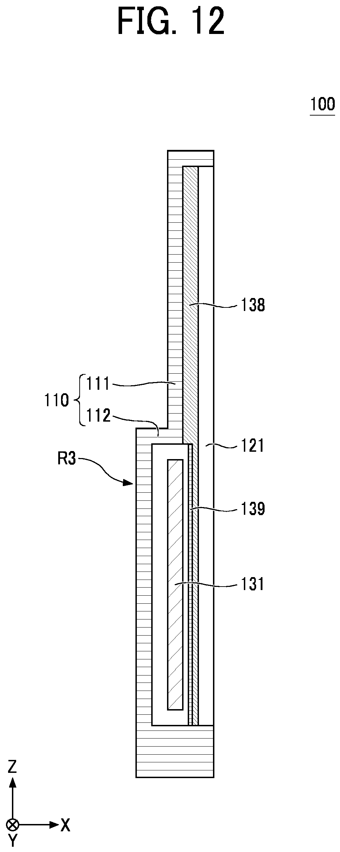

FIG. 12 is a cross-sectional view illustrating a fifth modification of an internal configuration of the display device 100 according to an embodiment of the present disclosure.

In the example illustrated in FIG. 12, the rear face of the display 121 and each of the control board 131 (high-temperature component) and the battery 133 (high-temperature component) are opposed to each other, similarly to the fourth modification. The display device 100 according to the present embodiment includes a sheet-shaped heat insulator 139 disposed between the rear face of the display 121 and each of the control board 131 and the battery 133.

In the example illustrated in FIG. 12, the display device 100 according to present the embodiment further includes the heat transfer member 138 disposed between the rear face of the display 121 and the heat insulator 139, which are opposed to each other.

Accordingly, the display device 100 according to the present embodiment can reduce the transmission of heat generated from the control board 131 and the heat generated from the battery 133 to the display 121. As a result, the display device 100 can prevent the display 121 from reaching high temperature.

In addition, the display device 100 according to the present embodiment can release the heat generated from the display 121 to the heat transfer member 138. As a result, the display device 100 can prevent the display 121 from reaching high temperature.

Although some embodiments of the invention have been described in detail above, the present disclosure is not limited to such specific embodiments, and various modifications and changes can be made within the scope of the gist of the invention described in the claims.

No component may be provided inside the left grip portion R1 and the right grip portion R2, or a component (for example, a speaker or an antenna unit) that does not reach a high temperature may be provided inside the left grip portion R1 and the right grip portion R2.

The left grip portion R1 and the right grip portion R2 may be configured such that the user can easily recognize the left grip portion R1 and the right grip portion R2. For example, the left grip portion R1 and the right grip portion R2 may have a shape to which a hand of the user is placed. For example, the left grip portion R1 and the right grip portion R2 may be indicated by a color different from the color of the intermediate portion R3.

## Claims

1. A display device (100) comprising:
a housing (110) including grip portions (R1, R2) to be gripped at a right end portion and a left end portion of the housing (110) in a horizontal direction;
a screen (121A) on a front face of the housing (110);
a control board (131) configured to control the display device (100) and disposed at a position at which the control board (131) does not overlap with the grip portions (R1, R2) in a direction orthogonal to the screen (121A);
**characterised by**:
a storage groove (112B) on a rear face of the housing (110); and
a stand (136) being rotatable and having a rectangular frame shape, the stand (136) configured to be stored in the storage groove (112B),
wherein the grip portions (R1, R2) are a left grip portion (R1) and a right grip portion (R2),
wherein the housing (110) is divided by the storage groove (112B) into the left grip portion (R1), the right grip portion (R2), and an intermediate portion (R3) disposed between the left grip portion (R1) and the right grip portion (R2),
wherein the inner space of the left grip portion (R1) is not connected to the inner space of the intermediate portion (R3), and
wherein the inner space of the right grip portion (R2) is not connected to the inner space of the intermediate portion (R3).

2. The display device (100) according to claim 1, further comprising a battery (133) disposed at a position at which the battery does not overlap with the grip portions (R1, R2) in the direction orthogonal to the screen (121A).

3. The display device (100) according to claim 1 or 2, wherein the housing (110) has a rectangular shape in a plan view from a front side or a rear side of the display device (100).

4. The display device (100) according to any one of claims 1 to 3, further comprising a thermal conductive sheet (137) attached to an inner face of the housing (110) at a position at which the inner face faces the control board (131) or the battery (133).

5. The display device (100) according to any one of claims 1 to 4, further comprising a heat transfer member (138) disposed between a rear face of the screen (121A) and a rear face of the housing (110) that are opposed to each other.

6. The display device (100) according to any one of claims 1 to 4, further comprising a heat transfer member (138) disposed between a rear face of the screen (121A) and one of the control board (131) and the battery (133).

## Patentansprüche

1. Anzeigevorrichtung (100), die umfasst:
ein Gehäuse (110) mit Griffabschnitten (R1, R2), die an einem rechten und einem linken Endabschnitt des Gehäuses (110) in horizontaler Richtung zu greifen sind;
einen Bildschirm (121A) auf der Vorderseite des Gehäuses (110);
eine Steuerplatine (131), die zur Steuerung des Anzeigegeräts (100) konfiguriert ist und an einer Position angeordnet ist, an der die Steuerplatine (131) die Griffabschnitte (R1, R2) in einer Richtung senkrecht zum Bildschirm (121A) nicht überlappt;
**gekennzeichnet durch**:
eine Aufbewahrungsnut (112B) auf der Rückseite des Gehäuses (110); und
einen drehbaren Ständer (136) mit rechteckiger Rahmenform, der so konfiguriert ist, dass er in der Aufbewahrungsnut (112B) verstaut werden kann,
wobei die Griffabschnitte (R1, R2) ein linker Griffabschnitt (R1) und ein rechter Griffabschnitt (R2) sind,
wobei das Gehäuse (110) durch die Aufbewahrungsnut (112B) in den linken Griffabschnitt (R1), den rechten Griffabschnitt (R2) und einen zwischen dem linken Griffabschnitt (R1) und dem rechten Griffabschnitt (R2) angeordneten Zwischenabschnitt (R3) unterteilt ist,
wobei der Innenraum des linken Griffabschnitts (R1) nicht mit dem Innenraum des Zwischenabschnitts (R3) verbunden ist, und
wobei der Innenraum des rechten Griffabschnitts (R2) nicht mit dem Innenraum des Zwischenabschnitts (R3) verbunden ist.

2. Anzeigevorrichtung (100) nach Anspruch 1, die ferner eine Batterie (133) umfasst, die an einer Stelle angeordnet ist, an der die Batterie die Griffabschnitte (R1, R2) in Richtung senkrecht zum Bildschirm (121A) nicht überlappt.

3. Anzeigevorrichtung (100) nach Anspruch 1 oder 2, wobei das Gehäuse (110) in der Draufsicht von der Vorder- oder Rückseite der Anzeigevorrichtung (100) eine rechteckige Form aufweist.

4. Anzeigevorrichtung (100) nach einem der Ansprüche 1 bis 3, die ferner eine wärmeleitende Folie (137) umfasst, die an einer Innenseite des Gehäuses (110) an einer Stelle angebracht ist, an der die Innenseite der Steuerplatine (131) oder die Batterie (133) zugewandt ist.

5. Anzeigevorrichtung (100) nach einem der Ansprüche 1 bis 4, die ferner ein Wärmeleitelement (138) umfasst, das zwischen einer Rückseite des Bildschirms (121A) und einer Rückseite des Gehäuses (110) angeordnet ist, die einander gegenüberliegen.

6. Anzeigevorrichtung (100) nach einem der Ansprüche 1 bis 4, die ferner ein Wärmeleitelement (138) umfasst, das zwischen einer Rückseite des Bildschirms (121A) und entweder der Steuerplatine (131) oder der Batterie (133) angeordnet ist.

## Revendications

1. Dispositif d'affichage (100) comprenant :
un boîtier (110) comprenant des portions de préhension (R1, R2) destinées à être saisies à une portion d'extrémité droite et une portion d'extrémité gauche du boîtier (110) dans une direction horizontale,
un écran (121A) sur une face avant du boîtier (110),
une carte de commande (131) conçue pour commander le dispositif d'affichage (100) et disposée à un emplacement où la carte de commande (131) ne chevauche pas les portions de préhension (R1, R2) dans une direction orthogonale à l'écran (121A),
**caractérisé par** :
une rainure de rangement (112B) sur une face arrière du boîtier (110), et
un support (136) pouvant pivoter et présentant une forme de cadre rectangulaire, le support (136) étant conçu pour être rangé dans la rainure de rangement (112B) ;
lesdites portions de préhension (R1, R2) consistant en une portion de préhension gauche (R1) et une portion de préhension droite (R2),
ledit boîtier (110) étant divisé par la rainure de rangement (112B) en la portion de préhension gauche (R1), la portion de préhension droite (R2) et une portion intermédiaire (R3) située entre la portion de préhension gauche (R1) et la portion de préhension droite (R2),
l'espace intérieur de la portion de préhension gauche (R1) n'étant pas raccordé à l'espace intérieur de la portion intermédiaire (R3), et
l'espace intérieur de la portion de préhension droite (R2) n'étant pas raccordé à l'espace intérieur de la portion intermédiaire (R3).

2. Dispositif d'affichage (100) selon la revendication 1, comprenant en outre une batterie (133) disposée à un emplacement où la batterie ne chevauche pas les portions de préhension (R1, R2) dans la direction orthogonale à l'écran (121A).

3. Dispositif d'affichage (100) selon la revendication 1 ou 2, dans lequel le boîtier (110) présente une forme rectangulaire, selon une vue en plan à partir d'un côté avant ou d'un côté arrière du dispositif d'affichage (100).

4. Dispositif d'affichage (100) selon l'une quelconque des revendications 1 à 3, comprenant en outre une feuille thermoconductrice (137) fixée à une face intérieure du boîtier (110) à un emplacement où la face intérieure fait face à la carte de commande (131) ou à la batterie (133).

5. Dispositif d'affichage (100) selon l'une quelconque des revendications 1 à 4, comprenant en outre un élément de transfert de chaleur (138) disposé entre une face arrière de l'écran (121A) et une face arrière du boîtier (110) qui sont opposées l'une à l'autre.

6. Dispositif d'affichage (100) selon l'une quelconque des revendications 1 à 4, comprenant en outre un élément de transfert de chaleur (138) disposé entre une face arrière de l'écran (121A) et un élément parmi la carte de commande (131) et la batterie (133).
